# EUROPEAN PATENT APPLICATION

(11) **EP 4 475 445 A1**
(43) Date of publication of application: **11.12.2024**
(21) Application number: 23766071.7
(22) Date of filing: 09.03.2023
(51) Int. Cl.: H04B 1/401, H04M 1/725

(54) **ANTENNA POWER ADJUSTMENT METHOD AND APPARATUS, ELECTRONIC DEVICE AND READABLE STORAGE MEDIUM**

(30) Priority: 09.03.2022 CN 202210228905
(71) Applicant: VIVO MOBILE COMMUNICATION CO., LTD., Dongguan, Guangdong 523863 (CN)
(72) Inventor: WANG, Yao, Dongguan, Guangdong 523863 (CN)
(74) Representative: Murgitroyd & Company
(86) International application number: PCT/CN2023/080401
(87) International publication number: WO 2023/169494

(57) **Abstract**

Embodiments of the present application discloses an antenna power adjustment method, applied to an electronic device including a radio frequency antenna, a UWB antenna, a UWB chip, a proximity detection apparatus and a switching switch. The method includes: receiving a first input when the switching switch is in a first state; and adjusting, in response to the first input, the switching switch to a second state, and reducing a transceiving power of the radio frequency antenna. When the switching switch is in the first state, the UWB antenna is communicated with the proximity detection apparatus via the switching switch, the proximity detection apparatus is configured to obtain a capacitance signal of the UWB antenna, and the electronic device adjusts the transceiving power of the radio frequency antenna according to the capacitance signal. When the switching switch is in the second state, the UWB antenna is communicated with the UWB chip via the switching switch, and the electronic device receives and transmits a signal via the UWB antenna.

## Description

### CROSS-REFERENCE TO RELATED APPLICATIONS

The present application claims the priority of Chinese Patent Application No. 202210228905.9, filed on March 9, 2022 and entitled "ANTENNA POWER ADJUSTMENT METHOD AND APPARATUS, ELECTRONIC DEVICE AND READABLE STORAGE MEDIUM", which is incorporated herein by reference in its entirety.

### TECHNICAL FIELD

The present application belongs to the technical field of communication, and in particular to an antenna power adjustment method and apparatus, an electronic device and a readable storage medium.

### BACKGROUND

When an electronic device is in use, if the human body is very close to it, for example, in a call scene, the human body will be affected by the radiation field of the electronic device. Specific absorption rate (Specific Absorption Rate, SAR) is used for measuring the radio radiation energy actually absorbed by the human body. There is a specified SAR limit in electronic devices, so SAR reduction is needed in all electronic devices.

In SAR reduction in the related art, whether it is necessary to reduce the conducting power of the antenna of the whole machine is determined mainly based on detecting the user's use state, such as acquiring the distance between the user's body and the electronic device by capacitance measurement. Since the measured capacitance value is positively related to the distance between the body and the antenna, when the measured capacitance value reaches a value, it is determined that the user's body is very close to the antenna of the electronic device, and the SAR reduction mode is activated to reduce the conducting power of the antenna. However, capacitance measurement requires the arrangement of a special metal conductor inside the electronic device as the SAR sensor plate, which forms a capacitance value with the human body when the human body comes near, and whether SAR reduction is required is determined by measuring the capacitance value. However, with the increasing functions of the electronic device, its internal space is getting smaller and smaller. The arrangement of the metal conductor will occupy the internal space of the electronic device and affect the design of other devices inside the electronic device, which will increase the thickness and weight of the electronic device, consequently affecting the user experience. In addition, the metal conductor used as a SAR sensor plate is limited in measurement directions in capacitance measurement, which may result in inaccurate measurement results.

### SUMMARY

The present application aims to provide an antenna power adjustment method and apparatus, an electronic device and a readable storage medium to solve the problems of occupation of the internal space of the electronic device and mutual influence between the SAR-reducing capacitance measurement metal conductor and the ultra-wideband (UWB) antenna.

In a first aspect, an embodiment of the present application provides an antenna power adjustment method, applied to an electronic device including a radio frequency antenna, a UWB antenna, a UWB chip, a proximity detection apparatus and a switching switch. The UWB antenna is electrically connected to the switching switch. The switching switch has a first connecting terminal and a second connecting terminal. The first connecting terminal is electrically connected to the proximity detection apparatus. The second connecting terminal is electrically connected to the UWB chip. The switching switch is switchable between different states.

The method includes:
receiving a first input when the switching switch is in a first state; and
adjusting, in response to the first input, the switching switch to a second state, and reducing a transceiving power of the radio frequency antenna.

When the switching switch is in the first state, the UWB antenna is communicated with the proximity detection apparatus via the switching switch, the proximity detection apparatus is configured to obtain a capacitance signal of the UWB antenna, and the electronic device adjusts the transceiving power of the radio frequency antenna according to the capacitance signal.

When the switching switch is in the second state, the UWB antenna is communicated with the UWB chip via the switching switch, and the electronic device receives and transmits a signal via the UWB antenna.

In a second aspect, an embodiment of the present application provides an antenna power adjustment apparatus, applied to an electronic device including a radio frequency antenna, a UWB antenna, a UWB chip, a proximity detection apparatus and a switching switch. The UWB antenna is electrically connected to the switching switch. The switching switch has a first connecting terminal and a second connecting terminal. The first connecting terminal is electrically connected to the proximity detection apparatus. The second connecting terminal is electrically connected to the UWB chip. The switching switch is switchable between different states.

The apparatus includes:
a receiving module, configured to receive a first input when the switching switch is in a first state; and
a switching module, configured to adjust, in response to the first input, the switching switch to a second state, and reduce a transceiving power of the radio frequency antenna.

When the switching switch is in the first state, the UWB antenna is communicated with the proximity detection apparatus via the switching switch, the proximity detection apparatus is configured to obtain a capacitance signal of the UWB antenna, and the electronic device adjusts the transceiving power of the radio frequency antenna according to the capacitance signal.

When the switching switch is in the second state, the UWB antenna is communicated with the UWB chip via the switching switch, and the electronic device receives and transmits a signal via the UWB antenna.

In a third aspect, an embodiment of the present application provides an electronic device, including a processor and a memory. The memory stores a program or an instruction runnable on the processor, and the program or the instruction, when being executed by the processor, implements steps of the method according to the first aspect.

In a fourth aspect, an embodiment of the present application provides a readable storage medium, storing a program or an instruction. The program or the instruction, when being executed by a processor, implements steps of the method according to the first aspect.

In this embodiment of the present application, the UWB antenna and the SAR-reducing capacitance measurement metal conductor are combined, so that the UWB antenna not only has the function of receiving and transmitting the UWB signal, but also can be used as a plate in SAR-reducing capacitance measurement. By the combination design, the SAR-reducing measurement accuracy of the electronic device can be improved by utilizing the advantage of omni-directional radiation of the UWB antenna without increasing external devices, and the space occupied inside the electronic device is reduced. Moreover, the UWB antenna can be applied in the electronic device without interference.

Other aspects and advantages of the present application will be given in the following description, some of which will become apparent from the following description or may be learned from practices of the present application.

### BRIEF DESCRIPTION OF THE DRAWINGS

The foregoing and/or additional aspects and advantages of the present application will become apparent and comprehensible in the description of the embodiments made with reference to the following accompanying drawings.
FIG. 1 is a schematic structural diagram I of an antenna power adjustment apparatus according to an embodiment of the present application;
FIG. 2 is a flowchart I of an antenna power adjustment method according to an embodiment of the present application;
FIG. 3 is a flowchart II of an antenna power adjustment method according to an embodiment of the present application;
FIG. 4 is a schematic structural diagram II of an antenna power adjustment apparatus according to an embodiment of the present application;
FIG. 5 is a schematic structural diagram of an electronic device according to an embodiment of the present application; and
FIG. 6 is a schematic structural diagram of an electronic device according to another embodiment of the present application.

### DETAILED DESCRIPTION

Embodiments of the present application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present application, and should not be construed as a limitation on the present application. All other embodiments obtained by a person of ordinary skill in the art based on the embodiments of the present application without making creative efforts shall fall within the protection scope of the present application.

A feature limited by "first" or "second" in this specification and claims of the present application may explicitly or implicitly include one or more of the features. In the description of the present application, unless otherwise stated, "a plurality of/multiple" means two or more than two. In addition, "and/or" used in this specification and the claims represents at least one of the connected objects, and the character "/" generally indicates an "or" relationship between the connected objects.

In the description of the present application, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation. Therefore, such terms should not be construed as limiting of the present application.

In the description of the present application, it should be noted that unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the present application according to specific situations.

An antenna power adjustment method provided by an embodiment of the present application will be described in detail below in conjunction with the accompanying drawings and through specific embodiments and application scenes thereof.

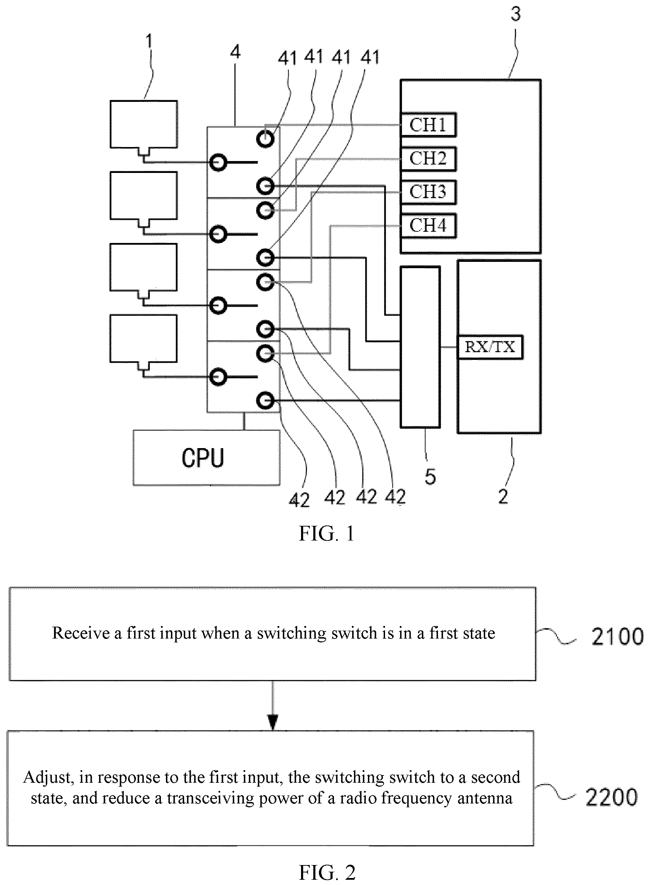

Referring to FIG. 2, FIG. 2 is a flowchart I of an antenna power adjustment method provided by an embodiment of the present application. The antenna power adjustment method provided by this embodiment of the present application may be applied to an electronic device. The electronic device may be, for example, a mobile phone, a tablet computer, a notebook computer, or the like. Referring to FIG. 1, the electronic device includes a radio frequency antenna (not shown in FIG. 2), a UWB antenna 1, a UWB chip 2, a proximity detection apparatus 3 and a switching switch 4. The UWB antenna 1 is electrically connected to the switching switch 4. The switching switch 4 has a first connecting terminal 41 and a second connecting terminal 42. The first connecting terminal 41 is electrically connected to the proximity detection apparatus 3. The second connecting terminal 42 is electrically connected to the UWB chip 2. The switching switch 4 is switchable between different states.

Referring to FIG. 2, the method may include step 2100 and step 2200, which will be described in detail below.

Step 2100: Receive a first input when the switching switch 4 is in a first state.

When the switching switch 4 is in the first state, the UWB antenna 1 is communicated with the proximity detection apparatus 3 via the switching switch 4, the proximity detection apparatus 3 is configured to obtain a capacitance signal of the UWB antenna 1, and the electronic device adjusts a transceiving power of the radio frequency antenna according to the capacitance signal.

Exemplarily, the electronic device includes a switching switch 4. The switching switch 4 may be a single-pole double-throw switch. In the electronic device, the UWB antenna 1 is electrically connected to a fixed terminal of the switching switch 4. The switching switch 4 further includes a control terminal, and the control terminal includes a first connecting terminal 41 and a second connecting terminal 42. When the switching switch 4 is in the first state, the first connecting terminal 41 is electrically connected to the proximity detection apparatus 3, so that the UWB antenna 1 can be electrically connected to the proximity detection apparatus 3 via the switching switch 4. The UWB antenna 1 is used as a SAR-reducing capacitance measurement metal conductor. When a user's body is in proximity to the electronic device, the proximity detection apparatus 3 is configured to obtain a capacitance signal formed between the user's body and the UWB antenna 1. In a case that the UWB antenna 1 is used as the SAR-reducing capacitance measurement metal conductor, the electronic device may adjust the transceiving power of the radio frequency antenna of the electronic device according to the capacitance signal obtained by the proximity detection apparatus 3.

Exemplarily, when the electronic device is used in daily life, the switching switch 4 is kept in the first state, so that the UWB antenna 1 and the proximity detection apparatus 3 are electrically connected. The UWB antenna 1 in the electronic device is in the SAR-reducing capacitance measurement mode, so that the electronic device can control the proximity detection apparatus 3 to start to detect the capacitance signal formed between the user's body and the UWB antenna 1 and determine whether it is required to activate the SAR reduction function of the electronic device according to the obtained capacitance signal.

Exemplarily, when the capacitance signal formed between the user's body and the UWB antenna 1 (i.e., the capacitance signal of the UWB antenna 1 obtained by the proximity detection apparatus 3) is greater than a preset threshold, the electronic device determines that the user is close to the electronic device and triggers the reduction of the transceiving power of the radio frequency antenna of the electronic device, thereby reducing the SAR value of the electronic device. When the capacitance signal formed between the user and the UWB antenna 1 (i.e., the capacitance signal of the UWB antenna 1 obtained by the proximity detection apparatus 3) is smaller than the preset threshold, the electronic device does not perform the function of adjusting the transceiving power of the radio frequency antenna of the electronic device.

Exemplarily, in a case that the switching switch 4 is kept in the first state, the user may transmit a UWB request to the electronic device by a user input device on the electronic device, and the electronic device may receive the UWB request.

The first input is the UWB request transmitted by the user to the electronic device by the user input device.

Step 2200: Adjust, in response to the first input, the switching switch 4 to a second state, and reduce the transceiving power of the radio frequency antenna.

When the switching switch is in the second state, the UWB antenna 1 is communicated with the UWB chip 2 via the switching switch 4, and the electronic device receives and transmits a signal via the UWB antenna 1.

Exemplarily, the user may transmit the UWB request to the electronic device by the user input device on the electronic device; and after the electronic device receives the UWB request, the electronic device may be controlled to activate the application program for adjusting the state of the switching switch 4 so as to adjust the switching switch 4 to the second state, and in a case that the switching switch 4 is in the second state, the transceiving power of the radio frequency antenna of the electronic device is reduced. Specifically, when the user transmits the UWB request to the electronic device by the user input device on the electronic device, it indicates that the user is operating the electronic device, so a small distance is formed between the user and the electronic device. In this case, the transceiving power of the radio frequency antenna should be reduced to reduce SAR so as to avoid the influence of high radiation power on the human body.

Exemplarily, the electronic device includes a switching switch 4. The switching switch 4 may be a single-pole double-throw switch. The UWB antenna 1 in the electronic device is electrically connected to a fixed terminal of the switching switch 4. The switching switch 4 further includes a control terminal, and the control terminal includes a first connecting terminal 41 and a second connecting terminal 42. Different from the case where the switching switch 4 is in the first state, when the switching switch 4 is in the second state, the first connecting terminal 41 is not electrically connected to the proximity detection apparatus 3, and the second connecting terminal 42 is electrically connected to the UWB chip 2 of the electronic device, so that the UWB antenna 1 is electrically connected to the UWB chip 2 via the switching switch 4. After receiving the UWB request inputted by the user to the electronic device by the user input device, the electronic device considers that the user is using the electronic device, and the function of reducing the transceiving power of the radio frequency antenna of the electronic device can be triggered.

After the SAR reduction function of the electronic device is triggered, the electronic device determines whether to reduce the SAR according to the use scene. Exemplarily, when the user is talking with the electronic device close to the ear, the radio frequency antenna of the electronic device operates to produce electromagnetic radiation. When the switching switch 4 is in the second state, the electronic device may detect that the user's body is very close to the electronic device by the positioning function of the UWB antenna 1. At this time, the electronic device needs to activate the reduction of the transmitting power of the radio frequency antenna (i.e., to reduce the SAR value), so that the radiation level of the electronic device is controlled within a safe range, thereby protecting the user. When the electronic device detects that the user's body is far from the electronic device by the UWB positioning function, the electronic device does not perform the function of reducing the maximum transmitting power of the radio frequency antenna.

Exemplarily, when the switching switch 4 of the electronic device is in the second state, the UWB antenna 1 is electrically connected to the UWB chip 2 via the switching switch 4. The UWB antenna 1 may perform its own function as an antenna, and the electronic device may receive and transmit a signal via the UWB antenna 1, thereby realizing the function of UWB positioning of the electronic device.

Exemplarily, the switching switch 4 of the electronic device has two different states, namely the first state and the second state, so that the electronic device can control the UWB antenna 1 to activate different application programs according to different states of the switching switch 4. The UWB antenna 1 may be used as a SAR-reducing capacitance measurement metal conductor, and may also perform its own function as a UWB antenna, so that the UWB antenna has multiple functions.

Exemplarily, the UWB antenna 1 is a patch antenna, usually a metal patch, which can be used as a SAR-reducing capacitance measurement metal plate to obtain the change of the capacitance signal outside. The UWB antenna 1 with the UWB positioning function can realize multi-directional accurate positioning, and determine whether the user's body is in proximity to the electronic device more comprehensively.

Exemplarily, according to the electronic device of this embodiment of the present application, the UWB antenna 1 is arranged inside the electronic device, for example, between the motherboard and the back cover. The UWB antenna 1 is shared by the proximity detection apparatus 3 and the UWB chip 2, and controlled by the switching switch 4. One UWB antenna 1 can perform different functions, so that the UWB antenna has multiple functions.

In this embodiment of the present application, using the UWB antenna 1 as the SAR-reducing capacitance measurement metal conductor can save the metal conductor additionally arranged inside the electronic device, which reduces the space occupied inside the electronic device and can reduce the weight of the electronic device to some extent, thereby being beneficial to realizing a light and thin electronic device.

It can be understood that in this embodiment of the present application, the SAR-reducing capacitance measurement metal conductor and the UWB antenna are combined, which replaces the solution of arranging a capacitive SAR-reducing sensor metal antenna (i.e., SAR-reducing antennas) in the electronic device. The existing capacitive SAR-reducing sensor metal antenna and the UWB antenna are concentrated between the motherboard and the back cover inside the electronic device, which will increase the volume and weight of the electronic device and affect the user experience.

In this embodiment of the present application, since the capacitive SAR-reducing sensor metal antenna is directly omitted, it is no longer shared by other antenna units in the electronic device, thereby avoiding affecting the design of antennas in the complete electronic device. Besides, the combination of the SAR-reducing capacitance measurement conductor and the UWB antenna can reduce the material cost.

In this embodiment of the present application, the UWB antenna 1 may exert its own function, i.e., the UWB positioning function, and may also be used as a metal plate for capacitance measurement to form a capacitance value with the user's body, so as to be used in SAR-reducing detection. That is, the UWB antenna 1 has both its own function and a compatible function. The two functions are used in different periods and do not interfere with each other, so that the UWB antenna has multiple functions.

It can be understood that there is no capacitive SAR-reducing sensor metal antenna in the electronic device, so there is no interference problem when it runs with the UWB antenna at the same time.

In addition, the existing metal conductor used as a SAR sensor plate is limited in measurement directions in capacitance measurement, which may result in inaccurate measurement results. However, the UWB antenna 1 used in this embodiment of the present application has the advantages of wide radiation range and omni-directional detection, which can improve the detection accuracy.

In this embodiment of the present application, the UWB antenna 1 and the SAR-reducing capacitance measurement metal conductor are combined, so that the UWB antenna 1 not only has the function of receiving and transmitting the UWB signal, but also can be used as a plate in SAR-reducing capacitance measurement. By the combination design, the SAR-reducing measurement accuracy of the electronic device can be improved by utilizing the advantage of omni-directional radiation of the UWB antenna 1 without increasing external devices, and the space occupied inside the electronic device is reduced. Moreover, the UWB antenna 1 can be applied in the electronic device without interference.

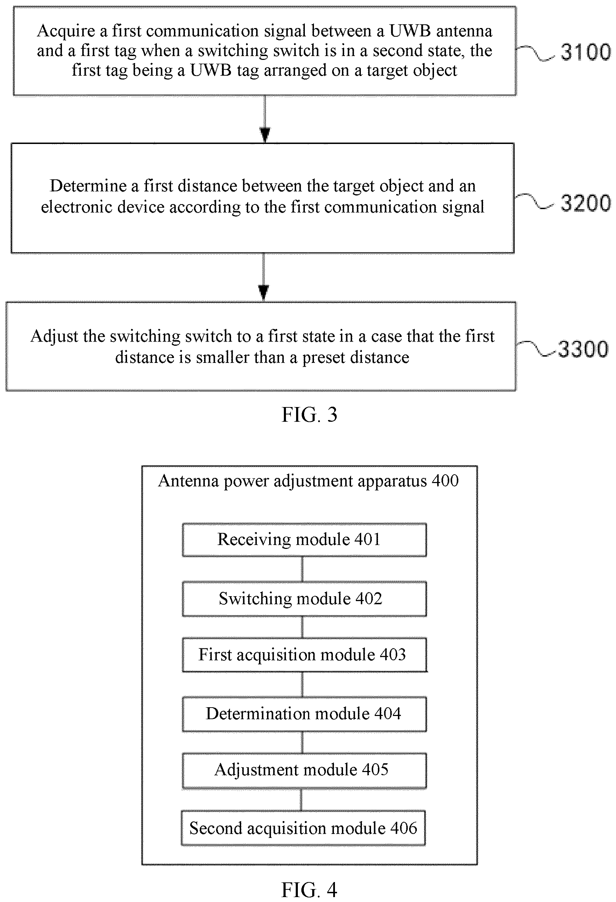

Referring to FIG. 3, FIG. 3 is a flowchart II of an antenna power adjustment method provided by an embodiment of the present application.

According to the antenna power adjustment method provided by this embodiment of the present application, the method may further include step 3100 to step 3300, which will be described in detail below.

Step 3100: Obtain a first communication signal between the UWB antenna 1 and a first tag when the switching switch 4 is in the second state, where the first tag is a UWB tag arranged on a target object.

Exemplarily, the switching switch 4 of the electronic device is in the second state, the UWB antenna 1 is electrically connected to the UWB chip 2 via the switching switch 4, and the UWB antenna 1 performs its own function as an antenna.

Exemplarily, the electronic device establishes UWB communication with an external UWB tag or the like via the UWB antenna 1 and the UWB chip 2, the UWB tag is pre-arranged on the target object, and the electronic device can obtain a first communication signal between the UWB antenna 1 and the UWB tag on the target object when the switching switch 4 is in the second state.

The target object is the user of the electronic device.

Exemplarily, the target object is the user, the user wears a wearable device such as a smart watch, a smart bracelet, smart glasses or the like, and a UWB tag, a UWB module and the like are integrated in the wearable device.

It should be noted that in addition to the wearable smart devices, UWB tags attached to the head, trunk and other parts of the human body may also detect the distance from the human body. The electronic device may flexibly reduce the SAR according to detection results of different parts. Exemplarily, the target object is the user, and the UWB tag is directly attached to the user's body.

Step 3200: Determine a first distance between the target object and the electronic device according to the first communication signal.

Step 3300: Adjust the switching switch to the first state in a case that the first distance is smaller than a preset distance.

Exemplarily, when the switching switch 4 of the electronic device is in the second state, the UWB antenna 1 is electrically connected to the UWB chip 2 via the switching switch 4, and the electronic device can control the UWB antenna 1 and the UWB chip 2 to cooperate to determine the distance (i.e., the first distance) between the target object and the electronic device after receiving the first communication signal between the UWB antenna and the first tag, thereby determining the size of the distance between the target object and the electronic device.

That is, when the switching switch 4 is in the second state, the UWB antenna 1 and the UWB chip 2 of the electronic device cooperate to perform the function of directional distance measurement of the UWB, thereby obtaining the distance between the target object and the electronic device.

Exemplarily, when the first distance formed between the user's body and the electronic device is smaller than a preset distance threshold, the electronic device may adjust the switching switch 4 to the first state, and the UWB antenna 1 reestablishes electrical connection with the proximity detection apparatus 3 via the switching switch 4. In this case, the UWB antenna 1 is used as a SAR-reducing capacitance measurement metal conductor, the proximity detection apparatus 3 is configured to obtain the capacitance signal of the UWB antenna 1, and the electronic device adjusts the transceiving power of the radio frequency antenna according to the capacitance signal.

Exemplarily, when the distance between the wearable device on the user's body and the electronic device obtained by the electronic device is smaller than the preset distance (the preset distance is, for example, set to 20 cm), the switching switch 4 is readjusted to the first state.

Exemplarily, when the distance between the UWB tag attached to the user's body and the electronic device obtained by the electronic device is smaller than the preset distance (the preset distance is, for example, set to 20 cm), the switching switch 4 is readjusted to the first state.

That is, this embodiment of the present application further uses a two-stage user's body proximity detection process. The positioning function of the UWB antenna 1 is used to perform omni-directional proximity detection between the wearable device/UWB tag on the user's body and the electronic device; and then, the UWB antenna 1 is used as the SAR-reducing capacitance measurement metal conductor (SAR Sensor plate) to perform user's body proximity detection so as to reconfirm whether the user's body is in proximity to the electronic device, thereby improving the detection accuracy.

According to the antenna power adjustment method provided by this embodiment of the present application, the method may further include step 5100, which will be described in detail below.

After the adjusting the switching switch 4 to the first state in a case that the first distance is smaller than a preset distance, the method further includes:

Step 5100: Reduce the transceiving power of the radio frequency antenna when a first capacitance value obtained by the proximity detection apparatus 3 meets a preset threshold. The first capacitance value is a capacitance value obtained by the proximity detection apparatus 3 via the UWB antenna 1.

Exemplarily, when the switching switch 4 is in the second state, the UWB antenna 1 and the UWB chip 2 of the electronic device cooperate to perform the function of directional distance measurement of the UWB. If the first distance between the target object and the electronic device obtained by the electronic device is smaller than the preset distance, the electronic device may adjust the switching switch 4 to the first state. When the switching switch 4 is in the first state, the UWB antenna 1 is used as the SAR-reducing capacitance measurement metal conductor (SAR Sensor plate) to perform user's body proximity detection. When the capacitance signal formed between the user's body and the UWB antenna 1 (i.e., the capacitance signal of the UWB antenna 1 obtained by the proximity detection apparatus 3) is greater than the preset threshold, the electronic device determines that the user is in proximity to the electronic device and triggers the reduction of the transceiving power of the radio frequency antenna of the electronic device, thereby reducing the SAR value of the electronic device.

The first capacitance value is the capacitance signal obtained by the proximity detection apparatus 3 via the UWB antenna 1, i.e., the capacitance signal/capacitance value formed between the user's body and the UWB antenna 1.

Exemplarily, when the capacitance signal formed between the user's body and the UWB antenna 1 (i.e., the capacitance signal of the UWB antenna 1 obtained by the proximity detection apparatus 3) is smaller than the preset threshold, the electronic device does not perform the function of adjusting the transceiving power of the radio frequency antenna of the electronic device.

According to the antenna power adjustment method provided by this embodiment of the present application, multiple UWB antennas 1 are provided, the UWB antennas 1 are patch antennas, and the switching switch 4 is a single-pole multi-throw switch.

Referring to FIG. 1, the multiple UWB antennas 1 are respectively electrically connected to the switching switch 4. The switching switch 4 includes multiple control terminals. The UWB antennas 1 are arranged in one-to-one correspondence to the control terminals, and each of the control terminals includes the first connecting terminal 41 and the second connecting terminal 42. Each of the first connecting terminals 41 is electrically connected to a connecting port on the proximity detection apparatus 3, and each of the second connecting terminals 42 is electrically connected to an antenna switch 5 and electrically connected to a connecting port on the UWB chip 2 via the antenna switch 5.

Exemplarily, referring to FIG. 1, four UWB antennas 1 which are all metal patch antennas are provided, and the switching switch 4 is a single-pole multi-throw switch. The switching switch 4 includes four control terminals. The UWB antennas 1 are arranged in one-to-one correspondence to the control terminals. Each of the control terminals includes a first connecting terminal 41 and a second connecting terminal 42. The four UWB antennas 1 arranged can radiate to different directions, so that the proximity of the user's body can be detected in multiple directions, and the detection result is more accurate.

It should be noted that in this embodiment of the present application, the specific number of the UWB antennas 1 is not limited to four, and may also be one, two, three or more, which can be flexibly adjusted according to the space in the electronic device and is not specifically limited in the embodiment embodiments of the present application. If the space in the electronic device is small, one UWB antenna 1 will be enough.

Exemplarily, the proximity detection apparatus 3 is a SAR sensor.

The SAR sensor, which is related to the radiation level of the electronic device, may determine the contact status between the user's body and the electronic device by capacitance measurement.

Exemplarily, the UWB antenna 1, which is a metal plate structure, may be used as a metal conductor for SAR-reducing capacitance measurement to detect the change in the capacitance, thereby determining whether the user's body is in proximity to the electronic device and further determining whether the electronic device triggers SAR reduction. The UWB antenna 1 has the UWB positioning function, and can realize multi-directional accurate positioning.

The execution subject of the antenna power adjustment method provided by this embodiment of the present application may be an antenna power adjustment apparatus. In this embodiment of the present application, the antenna power adjustment apparatus provided by this embodiment of the present application will be described in an example where the antenna power adjustment apparatus executes the antenna power adjustment method.

The antenna power adjustment apparatus provided by this embodiment of the present application is applied to an electronic device. Referring to FIG. 1, the electronic device includes a radio frequency antenna, a UWB antenna 1, a UWB chip 2, a proximity detection apparatus 3 and a switching switch 4. The UWB antenna 1 is electrically connected to the switching switch 4. The switching switch 4 has a first connecting terminal 41 and a second connecting terminal 42. The first connecting terminal 41 is electrically connected to the proximity detection apparatus 3. The second connecting terminal 42 is electrically connected to the UWB chip 2. The switching switch 4 is switchable between different states.

Corresponding to the above embodiment, referring to FIG. 4, an embodiment of the present application further provides an antenna power adjustment apparatus 400, including a receiving module 401 and a switching module 402.

The receiving module 401 is configured to receive a first input when the switching switch 4 is in a first state.

The switching module 402 is configured to adjust, in response to the first input, the switching switch 4 to a second state, and reduce a transceiving power of the radio frequency antenna.

When the switching switch 4 is in the first state, the UWB antenna 1 is communicated with the proximity detection apparatus 3 via the switching switch, the proximity detection apparatus 3 is configured to obtain a capacitance signal of the UWB antenna 1, and the electronic device adjusts the transceiving power of the radio frequency antenna according to the capacitance signal.

When the switching switch 4 is in the second state, the UWB antenna 1 is communicated with the UWB chip 2 via the switching switch 4, and the electronic device receives and transmits a signal via the UWB antenna 1.

In an embodiment, the antenna power adjustment apparatus 400 further includes a first acquisition module 403, a determination module 404 and an adjustment module 405.

The first acquisition module 403 is configured to obtain a first communication signal between the UWB antenna 1 and a first tag when the switching switch 4 is in the second state. The first tag is a UWB tag arranged on a target object.

The determination module 404 is configured to determine a first distance between the target object and the electronic device according to the first communication signal.

The adjustment module 405 is configured to adjust the switching switch to the first state in a case that the first distance is smaller than a preset distance.

In an embodiment, the antenna power adjustment apparatus 400 further includes a second acquisition module 406.

After the adjustment module 405 adjusts the switching switch 4 to the first state in a case that the first distance is smaller than the preset distance, the second acquisition module 406 is configured to reduce the transceiving power of the radio frequency antenna when a first capacitance value obtained by the proximity detection apparatus 3 meets a preset threshold.

The first capacitance value is a capacitance value obtained by the proximity detection apparatus 3 via the UWB antenna 1.

In an embodiment, multiple UWB antennas 1 are provided, the UWB antennas 1 are patch antennas, and the switching switch 4 is a single-pole multi-throw switch. Referring to FIG. 1, the multiple UWB antennas 1 are respectively electrically connected to the switching switch 4. The switching switch 4 includes multiple control terminals. The UWB antennas 1 are arranged in one-to-one correspondence to the control terminals, and each of the control terminals includes the first connecting terminal 41 and the second connecting terminal 42. Each of the first connecting terminals 41 is electrically connected to a connecting port on the proximity detection apparatus 3, and each of the second connecting terminals 42 is electrically connected to an antenna switch 5 and electrically connected to a connecting port on the UWB chip 2 via the antenna switch 5.

An ordinary SAR-reducing antenna (which is used as a SAR-reducing capacitance measurement metal conductor in the prior art) can only realize the proximity detection of the user's body in one direction. In this embodiment of the present application, the UWB antenna 1 with the UWB positioning function can realize multi-directional accurate positioning, and determine whether the user's body is in proximity to the electronic device more comprehensively. Moreover, the UWB antenna 1, which is also used as a SAR-reducing capacitance measurement metal conductor, can reconfirm whether the human body is in proximity, thereby improving the detection accuracy.

The antenna power adjustment apparatus in this embodiment of the present application may be an electronic device or a component in an electronic device, for example, an integrated circuit or a chip. The electronic device may be a terminal or other devices other than the terminal. For example, the electronic device may be a mobile phone, a tablet computer, a notebook computer, a palm computer, an in-vehicle electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), and may also be a server, a network attached storage (Network Attached Storage, NAS), a personal computer (personal computer, PC), a television (television, TV), a teller machine, or an automated machine, which are not specifically limited in this embodiment of the present application.

The antenna power adjustment apparatus in this embodiment of the present application may be an apparatus with an operating system. The operating system may be an Android (Android) operating system, may be an iOS operating system, or may be another possible operating system, which is not specifically limited in this embodiment of the present application.

The antenna power adjustment apparatus provided by this embodiment of the present application can implement all processes implemented by the method embodiments of FIG. 1, FIG. 3 and FIG. 4, details of which are omitted here for brevity.

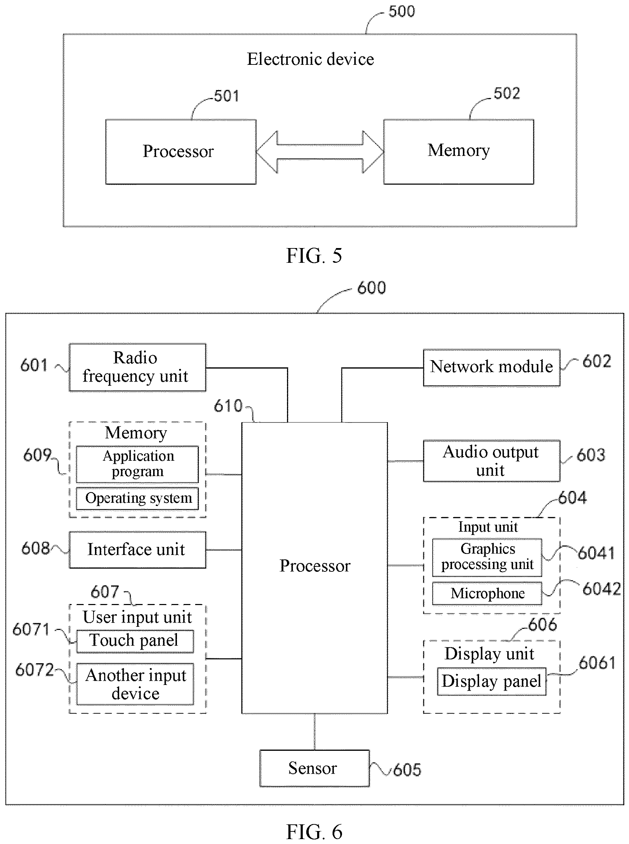

Optionally, as shown in FIG. 5, an embodiment of the present application further provides an electronic device 500, including a processor 501 and a memory 502. The memory 502 stores a program or an instruction runnable on the processor 501. The program or the instruction, when being executed by the processor 501, implements steps of the embodiment of the antenna power adjustment method, and can achieve the same technical effects. To avoid repetition, details are not described herein again.

FIG. 6 is a schematic diagram of a hardware structure of an electronic device for implementing an embodiment of the present application.

The electronic device 600 includes, but not limited to, components such as a radio frequency unit 601, a network module 602, an audio output unit 603, an input unit 604, a sensor 605, a display unit 606, a user input unit 607, an interface unit 608, a memory 609, a processor 610, and an antenna power adjustment apparatus.

It can be understood by those skilled in the art that the electronic device 600 may further include a power supply (such as a battery) for supplying power to the components. The power supply may be logically connected to the processor 610 through a power management system, thereby implementing functions such as charging, discharging, and power consumption management by using the power management system. The structure of the electronic device shown in FIG. 6 does not constitute a limitation to the electronic device, and the electronic device may include more or fewer components than shown, or combine some components, or have different component arrangements, which will not be described in detail.

The user input unit 607 is configured to receive a first input when the switching switch 4 is in a first state.

The processor 610 is configured to adjust, in response to the first input, the switching switch to a second state, and reduce a transceiving power of the radio frequency antenna.

When the switching switch 4 is in the first state, the UWB antenna 1 is communicated with the proximity detection apparatus 3 via the switching switch 4, the proximity detection apparatus 3 is configured to obtain a capacitance signal of the UWB antenna 1, and the electronic device adjusts the transceiving power of the radio frequency antenna according to the capacitance signal.

When the switching switch 4 is in the second state, the UWB antenna 1 is communicated with the UWB chip 2 via the switching switch 4, and the electronic device receives and transmits a signal via the UWB antenna 1.

In this embodiment of the present application, the UWB antenna and the SAR-reducing capacitance measurement metal conductor are combined, so that the UWB antenna not only has the function of receiving and transmitting the UWB signal, but also can be used as a plate in SAR-reducing capacitance measurement. By the combination design, the SAR-reducing measurement accuracy of the electronic device can be improved by utilizing the advantage of omni-directional radiation of the UWB antenna without increasing external devices, and the space occupied inside the electronic device is reduced. Moreover, the UWB antenna can be applied in the electronic device without interference.

In an embodiment, the processor 610 is configured to obtain a first communication signal between the UWB antenna and a first tag when the switching switch is in the second state, where the first tag is a UWB tag arranged on a target object; determine a first distance between the target object and the electronic device according to the first communication signal; and adjust the switching switch to the first state in a case that the first distance is smaller than a preset distance.

In an embodiment, after adjusting the switching switch to the first state in a case that the first distance is smaller than the preset distance, the processor 610 is further configured to reduce the transceiving power of the radio frequency antenna when a first capacitance value obtained by the proximity detection apparatus meets a preset threshold. The first capacitance value is a capacitance value obtained by the proximity detection apparatus via the UWB antenna.

It should be understood that in this embodiment of the present application, the input unit 604 may include a graphics processing unit (Graphics Processing Unit, GPU) 6041 and a microphone 6042. The graphics processing unit 6041 performs processing on image data of a static picture or a video that is obtained by an image acquisition apparatus (for example, a camera) in a video acquisition mode or an image acquisition mode. The display unit 606 may include a display panel 6061. The display panel 6061 may be configured in the form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include, but is not limited to, a physical keyboard, a functional key (such as a volume control key or a switch key), a track ball, a mouse, and a joystick, which are not repeated herein.

The memory 609 may be configured to store software programs and various pieces of data. The memory 609 may mainly include a first storage area for storing the program or instruction and a second storage area for storing data. The first storage area may store an operating system, an application program or instruction required by at least one function (for example, a sound playback function and an image display function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EEPROM) or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM) and a direct rambus RAM (Direct Rambus RAM, DRRAM). The memory 609 in this embodiment of the present application includes, but not limited to, these memories and any other suitable types.

The processor 610 may include one or more processing units. Optionally, the processor 610 integrates an application processor and a modem processor. The application processor mainly processes operations related to the operating system, the user interface and application programs, and the modem processor, such as a baseband processor, mainly processes wireless communication signals. It can be understood that the foregoing modem processor may not be integrated into the processor 610.

An embodiment of the present application further provides a readable storage medium. The readable storage medium stores a program or an instruction. The program or the instruction, when being executed by a processor, implements processes of the embodiment of the antenna power adjustment method, and can achieve the same technical effects. In order to avoid repetition, details will not be repeated here.

The processor is the processor in the electronic device in the above embodiment. The readable storage medium includes a computer-readable storage medium, such as a computer read-only memory (ROM), a random access memory (RAM), a magnetic disk, an optical disk or the like.

An embodiment of the present application further provides a chip, including a processor and a communication interface. The communication interface is coupled to the processor. The processor is configured to run a program or an instruction to implement processes of the embodiment of the antenna power adjustment method, and can achieve the same technical effects. In order to avoid repetition, details will not be described here.

It should be understood that the chip mentioned in this embodiment of the present application may also be referred to as a system on chip, a system chip, a chip system, a system on a chip or the like.

An embodiment of the present application further provides a computer program product. The program product is stored in a storage medium. The program product is executed by at least one processor to implement processes of the embodiment of the antenna power adjustment method, and can achieve the same technical effects. In order to avoid repetition, details will not be described here.

It should be noted that the term "include", "comprise", or any other variant thereof herein is intended to cover a non-exclusive inclusion, such that a process, method, article or apparatus that includes a series of elements includes not only those elements but also other elements not specifically listed, or elements that are inherent to the process, method, article or apparatus. In the absence of further limitation, an element defined by the phrase "including a ..." does not exclude the presence of the same element in the process, method, article or apparatus including the element. In addition, it should be noted that the scope of the method and apparatus in the implementations of the present application is not limited to performing functions in the order shown or discussed, but also may include performing functions in a substantially simultaneous manner or in a reverse order according to the functions involved. For example, the described methods may be performed in a different order from that described, and various steps may also be added, omitted, or combined. In addition, features described with reference to some examples may be combined in other examples.

Through the description of the above implementations, those skilled in the art can clearly understand that the methods according to the above embodiments can be implemented by software plus a necessary general hardware platform, and certainly, they can also be implemented by hardware, but in many cases the former is a better implementation. Based on such an understanding, the technical solution of the present application essentially or for the part that contributes to the prior art can be embodied in the form of a software product, and the computer software product is stored in a storage medium (such as an ROM/RAM, a magnetic disk or an optical disk) and includes several instructions to enable a terminal facility (which may be a mobile phone, a computer, a server, an air conditioner, a network device or the like) to execute the method described in the embodiments of this application.

The embodiments of the present application have been described above with reference to the accompanying drawings. However, the present application is not limited to the specific implementations described above, and the specific implementations described above are merely exemplary and not limitative. Those of ordinary skill in the art may make various variations under the teaching of the present application without departing from the spirit of the present application and the protection scope of the claims, and such variations shall all fall within the protection scope of the present application.

## Claims

1. An antenna power adjustment method, applied to an electronic device comprising a radio frequency antenna, a UWB antenna, a UWB chip, a proximity detection apparatus and a switching switch, wherein the UWB antenna is electrically connected to the switching switch, the switching switch has a first connecting terminal and a second connecting terminal, the first connecting terminal is electrically connected to the proximity detection apparatus, the second connecting terminal is electrically connected to the UWB chip, and the switching switch is switchable between different states; wherein
the method comprises:
receiving a first input when the switching switch is in a first state; and
adjusting, in response to the first input, the switching switch to a second state, and reducing a transceiving power of the radio frequency antenna,
wherein when the switching switch is in the first state, the UWB antenna is communicated with the proximity detection apparatus via the switching switch, the proximity detection apparatus is configured to obtain a capacitance signal of the UWB antenna, and the electronic device adjusts the transceiving power of the radio frequency antenna according to the capacitance signal; and
when the switching switch is in the second state, the UWB antenna is communicated with the UWB chip via the switching switch, and the electronic device receives and transmits a signal via the UWB antenna.

2. The antenna power adjustment method according to claim 1, wherein the method further comprises:
obtaining a first communication signal between the UWB antenna and a first tag when the switching switch is in the second state, wherein the first tag is a UWB tag arranged on a target object;
determining a first distance between the target object and the electronic device according to the first communication signal; and
adjusting the switching switch to the first state in a case that the first distance is smaller than a preset distance.

3. The antenna power adjustment method according to claim 2, wherein after the adjusting the switching switch to the first state in a case that the first distance is smaller than a preset distance, the method further comprises:
reducing the transceiving power of the radio frequency antenna when a first capacitance value obtained by the proximity detection apparatus meets a preset threshold,
wherein the first capacitance value is a capacitance value obtained by the proximity detection apparatus via the UWB antenna.

4. The antenna power adjustment method according to claim 1, wherein a plurality of UWB antennas are provided, the UWB antennas are patch antennas, and the switching switch is a single-pole multi-throw switch;
the plurality of UWB antennas are respectively electrically connected to the switching switch; the switching switch comprises a plurality of control terminals, the UWB antennas are arranged in one-to-one correspondence to the control terminals, and each of the control terminals comprises the first connecting terminal and the second connecting terminal; and each of the first connecting terminals is electrically connected to a connecting port on the proximity detection apparatus, and each of the second connecting terminals is electrically connected to an antenna switch and electrically connected to a connecting port on the UWB chip via the antenna switch.

5. An antenna power adjustment apparatus, applied to an electronic device comprising a radio frequency antenna, a UWB antenna, a UWB chip, a proximity detection apparatus and a switching switch, wherein the UWB antenna is electrically connected to the switching switch, the switching switch has a first connecting terminal and a second connecting terminal, the first connecting terminal is electrically connected to the proximity detection apparatus, the second connecting terminal is electrically connected to the UWB chip, and the switching switch is switchable between different states; wherein
the apparatus comprises:
a receiving module, configured to receive a first input when the switching switch is in a first state; and
a switching module, configured to adjust, in response to the first input, the switching switch to a second state, and reduce a transceiving power of the radio frequency antenna,
wherein when the switching switch is in the first state, the UWB antenna is communicated with the proximity detection apparatus via the switching switch, the proximity detection apparatus is configured to obtain a capacitance signal of the UWB antenna, and the electronic device adjusts the transceiving power of the radio frequency antenna according to the capacitance signal; and
when the switching switch is in the second state, the UWB antenna is communicated with the UWB chip via the switching switch, and the electronic device receives and transmits a signal via the UWB antenna.

6. The antenna power adjustment apparatus according to claim 5, wherein the apparatus further comprises:
a first acquisition module, configured to obtain a first communication signal between the UWB antenna and a first tag when the switching switch is in the second state, wherein the first tag is a UWB tag arranged on a target object;
a determination module, configured to determine a first distance between the target object and the electronic device according to the first communication signal; and
an adjustment module, configured to adjust the switching switch to the first state in a case that the first distance is smaller than a preset distance.

7. The antenna power adjustment apparatus according to claim 6, wherein the apparatus further comprises: a second acquisition module, wherein
after the adjustment module adjusts the switching switch to the first state in a case that the first distance is smaller than the preset distance, the second acquisition module is configured to reduce the transceiving power of the radio frequency antenna when a first capacitance value obtained by the proximity detection apparatus meets a preset threshold,
wherein the first capacitance value is a capacitance value obtained by the proximity detection apparatus via the UWB antenna.

8. The antenna power adjustment apparatus according to claim 6, wherein a plurality of UWB antennas are provided, the UWB antennas are patch antennas, and the switching switch is a single-pole multi-throw switch;
the plurality of UWB antennas are respectively electrically connected to the switching switch; the switching switch comprises a plurality of control terminals, the UWB antennas are arranged in one-to-one correspondence to the control terminals, and each of the control terminals comprises the first connecting terminal and the second connecting terminal; and each of the first connecting terminals is electrically connected to a connecting port on the proximity detection apparatus, and each of the second connecting terminals is electrically connected to an antenna switch and electrically connected to a connecting port on the UWB chip via the antenna switch.

9. An electronic device, comprising a processor and a memory, wherein the memory stores a program or an instruction runnable on the processor, and the program or the instruction, when being executed by the processor, implements steps of the antenna power adjustment method according to any one of claims 1 to 4.

10. A readable storage medium, storing a program or an instruction, wherein the program or the instruction, when being executed by a processor, implements steps of the antenna power adjustment method according to any one of claims 1 to 4.

11. A chip, comprising a processor and a communication interface, wherein the communication interface is coupled to the processor, and the processor is configured to run a program or an instruction to implement steps of the antenna power adjustment method according to any one of claims 1 to 4.

12. A computer program product, executed by at least one processor to implement steps of the antenna power adjustment method according to any one of claims 1 to 4.

13. An electronic device, configured to execute steps of the antenna power adjustment method according to any one of claims 1 to 4.
